# EUROPEAN PATENT APPLICATION

(11) **EP 3 034 291 A1**
(43) Date of publication of application: **22.06.2016**
(21) Application number: 15199892.9
(22) Date of filing: 14.12.2015
(51) Int. Cl.: B32B 7/00, B32B 7/02, B32B 7/12, B32B 15/00, B32B 15/04, B32B 15/20, B32B 27/06, B32B 27/08, B32B 27/18, B32B 27/28, B32B 27/32

(54) **METHOD TO IMPROVE MAKING OF HEAT SEALABLE BIAXIALLY ORIENTED FILMS**

(30) Priority: 15.12.2014 US 201414570836
(71) Applicant: TORAY PLASTICS (AMERICA), INC., North Kingstown, RI 02582-7500 (US)
(72) Inventor: JUNG, Chang-Yeol, Coventry, RI Rhode Island 02816 (US); DOU, Shichen, Sugarland, TX Texas 77479 (US); NUNN, Will E., Carolina, RI Rhode Island 02812 (US); BENZING, Jason J., Providence, RI Rhode Island 02909 (US); CHANG, Keunsuk P., North Kingstown, RI Rhode Island 02852 (US)
(74) Representative: Glawe, Delfs, Moll

(57) **Abstract**

Described are heat sealable and metallized multi-layer biaxially oriented polypropylene films and methods of making these films. The films and methods include a novel sealant composition having a polymeric coupling agent, which is used to form strong chemical linkages between anti-blocking agent (ABA) particles and the polymer matrix. The polymeric coupling agents enhance the nucleating efficiency of ABA particles and co-crystallize with polymer chain segments surrounding the ABA particles. Polymeric films with coextruded sealant layers can be made with improved morphology, thermal behavior, and dynamic rheological properties which can be easily released without sticking to cooling or casting drums at high film-making production speeds.

## Description

### Field of the Invention

This invention relates to a metallized multi-layer biaxially oriented polypropylene (BOPP) film with improved uniformity and barrier properties. More specifically, this invention relates to the application of a polymeric coupling agent in a sealant composition, which results in excellent self-release from a cooling drum of a high speed BOPP film line.

### Background of the Invention

Metallized biaxially oriented polypropylene (BOPP) films are widely used for packaging to form a gas and moisture vapor barrier for such items as dry foods and snack foods. Metallized BOPP film can also be used to perform decorative functions because of its intrinsic high gloss, shiny metallic, aesthetic appearance, for instance, in flower packaging. Before metal deposition, a BOPP film includes a surface layer suitable for receiving organic or inorganic coatings to form a gas and moisture vapor barrier. A heat sealable layer is useful for inclusion for bag and package sealing.

Working widths and line speed of a BOPP film line impact line productivity. Increased widths and higher line speed can reduce both energy consumption and production cost. It is desirable to increase the widths and line speed of a BOPP line to achieve high throughput. For an existing BOPP film line, the widths are fixed by design capacity, while line speed varies according to BOPP film products, types, thicknesses, and machine capacities. All of the factors including heating, cooling, machine capacities, materials, and product specifications can impact the maximum line speed that can be applied. A higher line speed can result in shorter dwell times for cooling during the casting process. This can cause processing issues, such as the cast film sticking onto the cooling drum and having a non-uniform film structure. These issues can further result in line instability, film breaks, and poor appearance.

The use of anti-blocking agents (ABA) in packaging films is known to improve the processing performance of both high speed film production equipment and packaging equipment. Commonly, they are used to improve the slippage among individual particles and reduce the adhesion (blocking) force between two adjacent surfaces of a film due to the presence of Van de Waals forces. The blocking force not only increases the film-to-film or film-to-equipment surface coefficient of friction (COF) but also results in handling problems and processing issues due to a film's binding and sticking to its adjacent surface. Anti-blocking agents are either bumpy particles or fine crystals on the film surface and they can act to increase the distance between two surfaces and reduce the contact area between the respective surfaces. Examples of anti-blocking agents include, but are not limited to: inorganic materials such as silica, talc, ceramic or glass micro-spheres, clays, calcium carbonate, etc.; and organic materials such as stearate salts, silicones, primary or secondary amides, and non-cross-linked or cross-linked polymeric particles, etc. Additionally, anti-blocking agents generally will reduce the film-to-film or film-to-equipment COF of two adjacent surfaces, while the selection and formulation of anti-blocking agents are determined by the application of the BOPP film. For a metallized barrier film, it is preferred to avoid low molecular weight migratory species, broad particle distribution, large particle sizes and high particle loadings to achieve desirable gas barrier properties. Additionally, it is preferred to avoid anti-block agents which have a tendency to contaminate the opposite outer surface due to migration or damage of the opposite surface in the form of microscopic scratches, sticking, and compression in downstream converting processes.

US Patent No. 5,847,042 describes a polyolefin composition with anti-blocking agents including synthetic organic anti-blocking agents and inorganic and synthetic anti-blocking agents. Inorganic anti-blocking agents for instance silica, talc, clay, kaolin, crystalline or non-crystalline aluminosilicates etc. are surface-treated using stearic acid, titanium or silane coupling agents to improve particle dispersion in polymer matrix. However, organic anti-blocking agents, such as cross-linked acrylic, polystyrenic, silicone resins, are not surface-treated by using coupling agents.

US Patent No. 6,590,021 discloses a polyolefin composition with anti-blocking agents, the composition used in the most outer layer of a polyolefin film demonstrates satisfactory anti-blocking and sliding properties. The composition comprises a combination of organic and inorganic anti-blocking agents as well as slip organic amide compound. Inorganic anti-blocking agents, for instance, silica, talc, crystalline or non-crystalline aluminosilicates etc., are surface-treated using titanium or silane coupling agent for improving the particle dispersion in polyolefin matrix. Organic anti-blocking agents for instance cross-linked polymethyl methacrylate (PMMA), cross-linked polystyrenic resins, and cross-linked silicone resins are used directly without surface treatment.

US Patent No. 7,754,340 discloses a masterbatch composition of synthetic organic PMMA (pearls) anti-blocking agent used for the production of multilayer polyolefin films. The composition contains a terpolymer of ethylene, acrylic ester, and glycidyl methacrylate, also called GMA. The patent that GMA terpolymer creates a binding between the PMMA particles and the polymer matrix of the most outer layer of a polymer film, according to the SEM images observed for the masterbatches, preventing particle extraction under high shear of a high speed film-making line. The extraction of PMMA particles leads to a deterioration in film quality such as optical properties, appearance and COF stability. However, clear how the binding structure is formed and what is the category of the binding in terms of chemistry. The hydrophilic polar groups on the surface of PMMA particles may only physically interact with the polar groups of GMA terpolymer.

US Patent No. 7,825,180 discloses a process of using soft coupling agent compositions to lower the stiffness of filled polyolefin parts but maintain the flexibility of the parts. The soft coupling agent compositions contain maleated EPDM (stiffness control), maleic anhydride grafted polypropylene Polybond® 3000 (high MFR, rheology control), and maleic anhydride grafted polypropylene Polybond® X5104 (low MFR, maleic anhydride function content control). The maleic anhydride group of these coupling agents reacts with the functional groups of inorganic fillers, forming covalent chemical bonds, which improve the adhesion and distribution of the inorganic fillers in the polyolefin matrix. Rather than the improvement in aspects of particle adhesion and distribution, a soft shell (of EPDM) surrounding the fillers is formed, and the soft shell maintains the flexibility of the filled polyolefin parts.

US Patent No. 5,271,976 describes a polymer composition for making a soft cast film. The compositions contain impact polypropylene copolymer and a rubber materials Fc and nucleating agent. Nucleating agents are used to raise the crystallization temperature of polymer compositions during the casting process of forming a film, leading to improvements in processability, production yield and efficiency.

US Patent No. 6,703,134 describes a metallized biaxially oriented multilayer film comprising an adhesion promoter in the skin of the metal receiving layer to provide a barrier to oxygen and moisture gas. The adhesion promoting layer contains a maleic anhydride grafted copolymer of syndiotactic polypropylene. The hydrophilic maleic anhydride or acid group promotes the adhesion between metal coatings particles and polymeric chain segments on the skin surface of the film.

### Summary of the Invention

The previously described references are directed improving the particle distribution and adhesion between the particle and polymer matrix using a coupling reaction. However, none of them attempt to create a special polymeric structure for high speed BOPP film production, as described herein, resulting from a coupling reaction to improve productivity and product quality.

Described are multilayer polypropylene films and methods of making and using polymeric coupling agents as a release promoter to increase the line speed of a BOPP line while maintaining film quality (uniform base film) such as high oxygen and moisture gas barrier as well as sealing performance without increasing the particle loading and size of the anti-blocking agent in the sealant layer, or additional capital such as cast system modification.

An embodiment of a method to make a biaxially stretched coextruded multilayer heat-sealable polypropylene film for metallization by cast film and biaxial stretching process is described. The cast film includes a core layer and at least one, but preferably two outer skin layers adjacent and contiguously attached to the core layer. The core layer is the thickest layer which provides the mechanical or bulk strength of the multilayered film. The thickness of the core layer preferably is in the range of from 5 to 50 µm, from 7-30, or more preferably in the range of from 10 to 20 µm.

In some embodiments, the first outer skin layer is a heat sealable layer comprising a polyolefin or blend of polyolefins, anti-blocking agents, and a polymeric coupling agent, with a thickness of 1 to 3 µm, more preferably, 1.2 to 2 µm after biaxial orientation. Aside from processability, the basic requirement for the heat-sealable layer composition is to demonstrate a low heat seal initiation temperature (SIT) and high seal strength.

In some embodiments, the polyolefins in the sealant layer can include terpolymers comprising at least one monomer selected from ethylene, propylene, and butene; copolymers of propylene and butene, copolymers of ethylene and propylene, copolymers of ethylene and butene; and blends thereof. In some embodiments, the anti-blocking agents include inorganic and organic spherical uniform particles with a narrow particle distribution. In some embodiments, the polymeric coupling agents include maleic anhydride (MAH) grafted polyolefins, polar copolymers or terpolymers of olefins, maleic anhydride, and acrylic acid/ester.

In some embodiments, the MAH-grafted polyolefins include maleic anhydride grafted homopolymers, copolymers, and/or terpolymers polymerized with at least one monomer selected from ethylene, propylene and butene. In some embodiments, the amount of grafting in the grafted polyolefins is at most 3.0 wt.%, less than 2 wt.%, or in the range of from 0.4 wt.% to 1.2 wt.% of the polymer for providing functional groups to react with the hydroxyl -OH functional groups of the anti-blocking agent or polar substrate that comprise the surface of the anti-blocking agents. The copolymers and terpolymers of olefins, maleic anhydride, and acrylic acid/ester are polar polymers with polar functional groups including maleic anhydride, acrylic acid, and acrylate esters. The olefin comonomers can, for example, be selected from ethylene, propylene, and butene. The polar co-monomers can be selected from maleic anhydride, unsaturated carboxylic acid, acrylic acids or esters. More preferably, the polar comonomers can be selected from monomers with strong chemical reactivity, for instance, maleic anhydride and glycidyl methacrylate. More preferably, the polymeric coupling agents are selected from maleic anhydride grafted semi-crystalline polyolefins with a crystallizable chain structure that is the same as that of the major polymer component in the polymer matrix of the first outer heat-sealable skin layer. The polymer chain segment of the selected coupling agent is eligible to crystallize with the crystalline segment of the major component in the polymer matrix by co-crystallization at temperatures favorable to the crystallization of the sealant layer composition.

In some embodiments, a film includes a second outer skin layer. This second outer skin layer can be a metal receiving layer comprising mini-random propylene homo- or copolymer, propylene copolymer copolymerized with ethylene and/or butene, or blends thereof; and anti-blocking agents. Suitable mini-random polypropylene resins for the second outer layer include ExxonMobil's PP4712 and Total Petrochemical's 3375HA grades. Suitable ethylene-propylene copolymers include Total 8437, Dow Versify® 3000 and ExxonMobilVistamaxx® 3980FL. The anti-blocking additives can be selected from both inorganic and organic materials for instance amorphous silica, talc, and cross-linked silicone polymers with a nominal diameter of 2 to 4 µm.

In some embodiments, a coextruded biaxially oriented polypropylene film comprises a core layer comprising polypropylene; and a heat sealable outer layer adjacent to the core layer comprising a blend of polyolefins, an anti-blocking agent, and a polymeric coupling agent that bonds to the anti-blocking agent and the at least one polyolefin.

In some embodiments, the coextruded biaxially oriented polypropylene film further comprises a second outer layer on a side of the core layer opposite the heat sealable outer layer. In some embodiments, the heat sealable outer layer has a thickness of 1 to 3 µm.

In some embodiments, the blend of polyolefins comprises propylene-based homopolymer, random copolymers or terpolymers. In some embodiments, the blend of polyolefins comprises propylene and one or more ethylene or butane monomers. In some embodiments, the blend of polyolefins comprises ethylene-propylene copolymers, propylene-butene copolymers, or ethylene-butene copolymers. In some embodiments, the blend of polyolefins comprises ethylene-propylene-butene terpolymer.

In some embodiments, the anti-blocking agent comprises inorganic or organic spherical particles comprising a hydroxyl functional group. In some embodiments, the heat sealable layer comprises 0.1 wt% to 2.0wt% polymeric coupling agent. In some embodiments, the polymeric coupling agent comprises a maleic anhydride grafted polyolefin, copolymer of an olefin or terpolymer of an olefin having a reactive functional group. In some embodiments, the olefin is ethylene, propylene or butene. In some embodiments, the polymeric coupling agent comprises a maleic anhydride olefin-acrylic acid/ester having a reactive functional group.

In some embodiments, the polymeric coupling agent comprises polyolefins with a grafting rate of at most 3.0 wt.%. In some embodiments, the polymeric coupling agent comprises at least one polar functional group selected from the group consisting of maleic anhydride, acrylic acid, and acrylate ester. In some embodiments, the polymeric coupling agent reacts with hydroxyl functional groups on a surface of the anti-blocking agent and forms covalent bonds with the polymeric coupling agent and the anti-blocking agent at polyolefin extrusion temperatures. In some embodiments, the polymeric coupling agent comprises maleic anhydride grafted polypropylene homopolymer. In some embodiments, a surface of the film opposite the heat sealable layer is metallized. In some embodiments, the metallized layer comprises aluminum. In some embodiments, the metallized layer has an optical density of 2.0-4.0.

In some embodiments, a method of making a coextruded heat sealable polypropylene film comprises coextruding a core layer and heat sealable outer layer adjacent to the core layer, wherein the heat sealable layer comprises a blend of polyolefins, an anti-blocking agent, and a polymeric coupling agent that bonds to the anti-blocking agent and the at least one polyolefin; and biaxially orienting the coextruded film. In some embodiments, the method further comprises coextruding with the core layer and the heat sealable layer a second outer layer on a side of the core layer opposite the heat sealable outer layer.

### Brief Description of the Drawings

Figure 1 is a schematic showing a casting process of a high speed BOPP line which uses a series of cooling drums to receive, quench, and form a molten polymeric extrudate into a solid sheet, without the use of a water bath according to embodiments of the invention.
Figure 2 is graph showing the non-isothermal crystallization behavior (as determined by DSC) of the sealant compositions listed in Table 1.
Figure 3 illustrates a coupling reaction according to embodiments of the invention.

### Detailed Description of the Invention

Described are films and methods of making and using polymeric coupling agents as a release promoters to increase the line speed of a BOPP line while maintaining film quality (uniform base film) such as high oxygen and moisture gas barrier as well as sealing performance without increasing the particle loading and size of the anti-blocking agent in the sealant layer, or additional capital such as cast system modification.

The disclosed methods can increase the line speed and productivity of heat-sealable BOPP films made on an existing BOPP film lines without the need for expensive capital investments and without the need for adding additional anti-blocking agents that can deteriorate the quality of metallized BOPP film products or heat-sealability properties.

Cast and oriented films described herein having a heat sealable layer demonstrate unexpectedly improved processability at a high line speed and with a uniform film structure. Processing issues of the heat-sealable layer sticking to the cooling drum are resolved through the application of polymeric coupling agents, resulting in high productivity as well as good gas and moisture vapor barrier properties after metallization.

For a typical BOPP film line operating at a line speed close to its maximum limit, it is very challenging to further increase casting speed (throughput) as the sealant layer tends to stick to the cooling drum. Sealant compositions should be designed to maintain the seal initiation temperature (SIT), desired heat seal strength, optical properties, anti-blocking agents, and COF control, required for processability and finished product quality. Nucleating agents are sometimes used to improve the release of a cast film from cooling drum. Adding large-size anti-blocking agents into the sealant layer or increasing particle counts can solve the sticking issues; however, this method of reducing sticking issues is undesirable as it not only increases product cost but can also deteriorate product quality such as optical and barrier properties, and can also negatively affect the heat seal properties of the BOPP film such as raising the seal initiation temperature (SIT).

Described are films and methods which include polymeric coupling agents in the sealant compositions of a cast film produced on a high speed BOPP line. The polymeric coupling agents are not only used to improve the distribution of anti-blocking agents and increase the adhesion between said particle and polymer matrix; but also are used as a release promoter of the sealant layer of a cast film from the cooling drum through the effects of co-crystallization and nucleation within the sealant layer. The described methods can use the coupling agent as a release promoter in a coextruded sealant layer to increase the casting speed of a multilayer BOPP film made on an existing BOPP film line.

Various specific embodiments, examples, definitions and descriptions are adopted in the art for understanding the invention. The details in the art are only used to provide specific preferred embodiments and exemplary to those skilled in the art. The scope of the invention will refer to any one or more in the appended claims, but not necessarily all, of the invention defined by the claims.

It is understood that aspects and embodiments of the invention described herein include "consisting" and/or "consisting essentially of" aspects and embodiments. For all methods, systems, compositions, and devices described herein, the methods, systems, compositions, and devices can either comprise the listed components or steps, or can "consist of" or "consist essentially of" the listed components or steps. When a system, composition, or device is described as "consisting essentially of" the listed components, the system, composition, or device contains the components listed, and may contain other components which do not substantially affect the performance of the system, composition, or device, but either do not contain any other components which substantially affect the performance of the system, composition, or device other than those components expressly listed; or do not contain a sufficient concentration or amount of the extra components to substantially affect the performance of the system, composition, or device. When a method is described as "consisting essentially of" the listed steps, the method contains the steps listed, and may contain other steps that do not substantially affect the outcome of the method, but the method does not contain any other steps which substantially affect the outcome of the method other than those steps expressly listed.

The solidification of a molten coextruded sealant layer (which is part of an overall molten coextruded cast film) under typical casting conditions depends on the nucleation and crystal growth rate of said layer; which is in turn, is impacted by foreign particles which can nucleate polymer crystallization. These foreign particles can include: impurities in a polymer composition, additional conventional nucleating agents, intentionally added fillers or anti-blocking agents (ABA) function; which can act as nuclei to initiate polymer crystallization, increase the crystallization rate, and raise the crystallization peak temperature of a sealant layer composition.

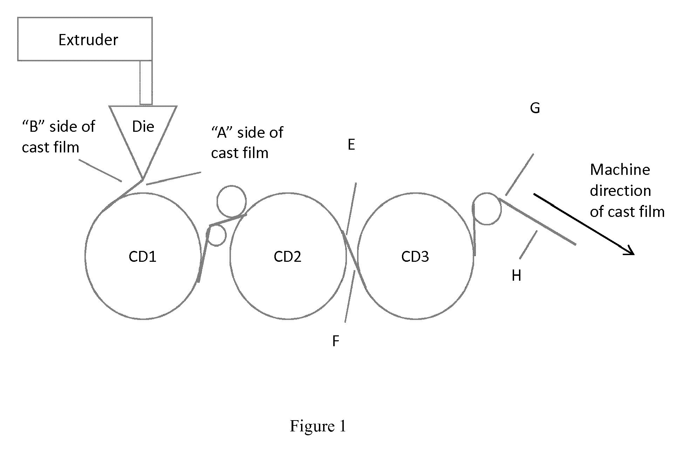

Figure 1 is a schematic showing the casting process of a high speed BOPP line which uses a series of cooling drums to receive, quench, and form a molten polymeric extrudate into a solid sheet, without the use of a water bath. The non-heat sealable layer side ("A"-side) of the quenched cast film - which can function as a metal receiving layer or a print receiving layer -- is cast onto the cooling drum 1 (CD1) such that the non-heat sealable side is in contact with CD1; then the sealant layer side ("B"-side) is in direct contact with the surface of the cooling drum 2 (CD2). The cast film continues to cool and crystallize on the cooling drum 3 (CD3) for further solidification. (This configuration of the A and B-sides of the cast sheet lends itself well for downstream processing in which the non-heat-sealable layer can be discharge-treated to increase its surface energy for metallizing, printing, coating, etc. However, it can be recognized by those skilled in the art, that the reverse configuration can also be utilized.) Increasing the casting speed results in a shortened cooling time and crystallization time for the cast film.

Without being bound by any theory, the sealant layer usually has a slower crystallization rate than the predominantly polypropylene homopolymer core layer or non-heat-sealable layer (since the sealant layer tends to be intrinsically more amorphous and less crystalline), and thus tends to stick to the CD2 as the crystallization time is insufficient enough to allow the sealant layer to solidify enough to allow it to be easily released from CD2 without sticking. As a result of the cast film's B-side sticking to the CD2, irregular film vibrations and fluttering across the transverse direction of the entire film but vertical to the film's surface are observed at the contact between the film and the surface of the cooling drums (CD2 and CD3) in the region from E to F as shown in Figure 1. The vibrations initiated at the CD2 (due to the sealant B-side sticking to CD2) transfer along the machine direction and causes the cast film to have irregular contact with CD3. As a result of these irregular contacts or fluttering, air pockets (or void spaces) develop between the A-side surface of the cast film and the surface of CD3, instead of having a desired intimate contact between said A-side surface and the CD3 surface. This irregular contact results in poorer and inconsistent cooling of the cast film, and results in an undesirably higher film temperature as detected by an infrared (IR) temperature sensor at location G as shown in Figure 1.

In the meantime, irregular "hot spots" can be observed at the center area of the cast film which can be detected by using an IR camera at location H. Such air pockets or void spaces prevent good, efficient heat transfer from the cast film to the cooled metal (e.g. stainless steel) surface of CD3, which is thermally conductive. It is well-known in the art that the thermal conductivity of air and stainless steel are 0.024 and 16 W/mK, respectively. These air pockets (or void spaces) not only reduce the area of overall surface contact within the interface between the polymer melt and CD metal but also reduce the efficiency of the heat transfer there through. The poor heat transfer through the interface develops hot spots in areas of the cast film such that the polymer melt in these hot spots crystallize at a crystallization rate that is lower than that of other areas with good heat transfer, thus leading to irregular crystallization across the film and possibly forming both irregular polymer spherulitic structure and inconsistent crystallinity in the cast film. The irregularities of the cast film can then cause both processing and quality issues during subsequent machine direction orientation (MDO) and transverse direction orientation (TDO), for instance, uneven stretch marks, appearance defects, film breaks, poor winding performance, and poor gas barrier properties. To eliminate air pockets and hot spots, the surface of the cast film needs to release smoothly and consistently from the CD2 cooling drum.

In some embodiments, a film includes a core layer that comprises 80 wt.% to 100 wt.% semi-crystalline isotactic polypropylene with a specific isotacticity and optionally, 0 to 20 wt.% modifiers such as ethylene-propylene copolymers and hydrocarbon resins. In some embodiments, the core resin layer is 5 µm to 50 µm in thickness after biaxial orientation, preferably between 10 µm and 20 µm, and more preferably 15 - 18 µm. Suitable examples of semi-crystalline isotactic polypropylenes include Total 3271 and 3270, and ExxonMobil PP4772. Typically, these resins have a melt flow rate of about 0.5 to 5 g/10min., a melting point of about 160 - 167 °C, and a density of about 0.90 - 0.91g/cm³. Typical isotactic content (as measured by ¹³C NMR spectroscopy of the resins dissolved in a 1,2,4-trichlorobenzene solution at 130°C and obtaining the per cent isotacticity from the intensity of the isotactic methyl group at 21.7 ppm vs. the total isotactic and atactic methyl groups from 22 - 19.4 ppm) is ca. 90% or greater, preferably 92% or greater.

In some embodiments, the film includes an optional metal receiving layer. This layer can include propylene homopolymers; propylene copolymers with ethylene, butene, or both; "mini-random" ethylene-propylene homopolymers; or blends thereof. Preferably, "mini-random" polypropylenes include such as ExxonMobil PP4712, Total 3375HA, and Phillips 66 CR027, which are comprised of an ethylene component in the range of less than 1.0 wt.% of the polymer, and preferably about 0.5 wt.% - 0.6 wt.% of the polymer. In some embodiments, the melt flow rate of suitable mini-random polypropylenes is in the range of 2.5 to 5 g/10 min. and the melting point of suitable mini-random polypropylenes is in the range of 155 to 165 °C. The metal receiving layer can also comprise of preferably spherical anti-blocking agents of nominal 2 to 3 µm diameter, in the range of from 0.01 to 0.1 wt.% of the layer, and preferably about 0.03 - 0.05 wt.%, for good machinability and a controlled coefficient of friction. The metal receiving layer may be coextruded with the core layer and can have a thickness after biaxial orientation between 0.2 and 5 µm, preferably between 0.6 and 3 µm, and more preferably between about 0.75 and 1.0 µm.

The sealant layer formulation may include commercially available heat sealable resins, anti-blocking agents, and at least one polymeric coupling agent. The heat sealable layer can be coextruded on one side of the core layer of semi-crystalline polypropylene resin and an optional second outer skin layer can be coextruded on the side of the core layer opposite the heat sealable skin layer. This second outer skin layer can function as a metal receiving layer and can be comprised of mini-random polypropylene resins.

In some embodiments, the heat sealable resins include but are not limited to: conventional ethylene-propylene-butene terpolymer, ethylene-propylene copolymer, propylene-butene copolymer, ethylene-butene copolymer, a composition with semi-crystalline propylene-based polymers, or blends thereof. The sealant compositions can be formulated to balance between minimum seal initiation temperature (SIT), heat seal strength, and machinability of film processing during the steps of casting, stretching, slitting, metallizing and packaging. Copolymers with lower melting temperature in the heat sealable layer tend to stick to the cooling drum because they crystallize at lower temperatures -- due to their high amorphous content -- when a film is cast prior to machine direction orientation. Copolymers which have higher melting temperatures can be used to offer capability of crystallization at higher temperature to help avoid sticking issues during casting; however, seal range performance and SIT could be sacrificed due to their higher melting temperature range. The structure and properties of these copolymers are widely described in the art.

Suitable random ethylene-propylene-butene terpolymers include SPX78J7 available from Simitomo Chemical Company in Japan and Adsyl® 7384 commercially available from LyondellBasell. The crystallization and melting temperatures of these terpolymers are about 90-98°C and 126-134 °C, respectively, lower than that of propylene homopolymer.

Suitable copolymers with lower melting temperature include propylene-butene based and ethylene-propylene based copolymers. The propylene-butene based copolymer preferably has 20-40 wt.% butene content and is a metallocene-catalyzed random thermoplastic elastomer. The elastomer is less crystalline and can have perfect miscibility with polypropylene and ethylene-propylene copolymer resins. Suitable metallocene-catalyzed propylene-butene copolymers are for instance such as those manufactured by Mitsui Chemicals under the tradename Tafmer® and grade names XM7070 and XM7080 having a melting point of 75°C and 83°C and a Vicat softening point of 67 °C and 74°C, respectively. The random copolymers provide lower seal initiation temperature and maintain high seal strength when used as a heat sealant modifier. Suitable ethylene-propylene copolymers include those such as ExxonMobil's Vistamaxx® 3980 FL and Dow Chemical's Versify® 3200 thermoplastic elastomers. The Vistamaxx® 3980FL resin has an ethylene content of 8 wt.%, 8 g/10min of MFR at 230°C, density of 0.88 g/cm³, Tg of -22 °C, melting temperature 78 °C, and Vicat softening point of 80°C. The Versify® 3200 resin has about 9 wt.% ethylene content, 8 g/10 min of MFR at 230°C, density of 0.876 g/cm³, T_{g} of -23 °C, melting temperature 82 °C, and Vicat softening point of 59°C.

Without being bound by any theory, the functional groups on the polymer chain of polymeric coupling agents in the blended sealant resin can react with the functional groups on the surface of ABA particles at the polymer melt temperatures used during extrusion to form strong chemical bonds between the coupling agent and ABA particles. The strong chemical bonds increase the crystallization temperature of the sealant layer's matrix polymers because the nucleating effects of the ABA particles are further enhanced by the polymeric coupling agents. This results in a change in the morphology, thermal behavior, and dynamic rheological properties of the sealant layer to make it more favorable for said sealant layer to release from the cooling drum's surface. The film vibration and hot spots resulting from the cast film sticking to the cooling drum can be eliminated or significantly reduced. Such a coextruded multilayer film demonstrates excellent uniformity and stability in downstream processing of machine direction orientation, transverse direction orientation, and metallization.

The coupling agent is a compound which provides interactions between different properties of a system. Coupling agents comprise bonding agents and surfactants, including dispersing agents and compatibilizers. Bonding agents act as bridges that link, for instance, inorganic or organic particles to the polymeric matrix by one or more of the mechanisms including covalent bonding, polymer chain entanglement, and intermolecular interactions in the case of strong hydrogen bonding and weak Van der Waals forces. Compatibilizers provide compatibility between two typically dissimilar materials through reduction of the interfacial tension, for instance, silane and titanate compounds react with inorganic fillers or particulates and lower the surface energy of inorganic materials, making them non-polar and more similar to the polymer matrix. Dispersing agents, for instance, stearic acid and its metallic salts reduce the interfacial energy at the inorganic particulate-polymer matrix interface to help form uniform dispersion without particulate aggregation in the polymer matrix. In general, compatibilizers and dispersing agents do not form strong adhesion at the interface between the antiblock particulate and the polymer matrix. Herein it is should be noted that there is a functional distinction between bonding agents, compatibilizers, and dispersing agents. The interactions between a coupling agent and antiblock particulates can be intermolecular interactions or covalent bonds, depending on the functional groups of both the coupling agent and the particulate. Covalent bonds are much stronger than intermolecular interactions. The interactions between a coupling agent and the polymer matrix depend on the structure of the organic groups of the coupling agent. Conventional coupling agents, for instance, silane and titanate compounds chemically linked to antiblock particulates have short organic groups which provide compatibility to the polymer matrix.

The polymeric coupling agents react with the hydroxyl -OH functional groups on the surface of the anti-blocking agent particulates and have long polymer chain segments embedded into the surrounding polymer matrix. Preferably, at least one of the comonomers of a polymeric coupling agent is the same as one of the comonomers of the polymers in the polymer matrix of said sealant compositions for good compatibility and co-crystallization. The polymeric coupling agents not only provide strong bonding between the antiblock particulate and the surrounding polymer matrix -- which leads to a uniform particle distribution -- but also take part in the co-crystallization of the polyolefins used in the outermost skin layers of a multilayer polyolefin film during casting. The co-crystallization resulting from a molecular structure similar to that of the polymer matrix enhances the nucleating effects of the polymeric coupling agent and changes the rheology of the surrounding area of the ABA particles.

The preferred polymeric coupling agents include modified polar polyolefins including maleic anhydride (MAH) grafted polyolefins, olefin and acrylic acid/ester copolymerized polar polymers, having a number average molecular weight in the range of from 20,000 to 400,000 grams/mole and a melt flow rate of from 3 to 700 grams /10 min. at 190°C/2.16Kg. The content of polymeric coupling agents is preferred to be in the range of from 0.05 to 2.0 wt.% of the sealant layer.

The modified polyolefins include maleic anhydride grafted homopolymers, copolymers, and terpolymers polymerized with at least one monomer selected from ethylene or propylene. In some embodiments, the amount of grafting in the grafted polyolefins is at most 3.0 wt.%, preferably, in the range of from 0.4 to 1.2 wt.% for providing functional groups to react with the functional groups of the polar substrate that comprises the surface of the anti-blocking agents. The anhydride functional group of the maleic anhydride -grafted polyolefins is very reactive in terms of the extent to which it can react with the hydroxyl functional groups of the substrate that comprises the surface of the anti-blocking agents, and can form a covalent chemical bond between the polymeric coupling agent and the ABA particles. Suitable MAH-grafted-polyolefins include those that can be obtained commercially from Arkema Inc., for instance, OREVAC® CA 100 and 18340 grades. OREVAC® CA100 is MAH-grafted-polypropylene resin with a melt flow rate of 200 g/ 10 min. at 190 °C/2.16Kg and a melting point of 164 °C. OREVAC®18340 is a MAH-grafted-linear low density polyethylene resin with a melt flow rate of 3 g /10 min. at 190 °C/2.16 Kg. Other suitable MAH-grafted-polyolefins are those obtained from Addivant Corporation, for instance, Polybond® 3000 and 3200 grades. These MAH-grafted-polypropylene resins have high melt flow rates of 400 g/10 min and 115 g/10 min. at 190 °C/2.16 Kg, respectively. Polybond® 3000 has a number average molecular weight of 25, 000 g/mole, a maleic anhydride grafting level of 1.2 wt.% and a melting point of about 161°C.

The polar copolymers and terpolymers include the monomers of olefins, maleic anhydride, acrylic acid, and acrylate esters. The olefin comonomer is preferred to be ethylene. The polar co-monomers can be selected from maleic anhydride, unsaturated carboxylic acid, acrylic acids or esters. More preferably, the polar comonomers can be selected from monomers with strong chemical reactivity, for instance, maleic anhydride and glycidyl methacrylate. Examples of suitable polar terpolymers are random terpolymers that can be obtained from Arkema such as Lotader® 3210 and AX8900 grades. Lotader®3210 is an ethylene-butene-maleic anhydride terpolymer, having a melt flow rate of 5 g/10 min. at 190 °C/2.16Kg, a reactive group content of 3.1 mol % and a melting point of 107 °C. Lotader® AX8900 is an ethylene-acrylic ester-glycidyl-methacrylate (GMA) terpolymer, having a melt flow rate of 6.0 g/10min. at 190 °C/2.16Kg, a reactive group content (GMA) of 8 mol% and a melting point of 65°C.

Preferably, the polymeric coupling agents are selected from modified semi-crystalline polyolefins with a crystallizable chain structure that is the same as that of said major polymer composition comprising the polymer matrix of the sealant layer. The polymer chain segment of the selected coupling agent is preferably eligible to co-crystallize with the crystalline segment of the major component in the polymer matrix by co-crystallization at a temperature favorable to the crystallization of the polymer matrix.

More preferably, the selected polymeric coupling agents have high melt flow indexes (MFI); this high MFI makes these selected coupling agents easy to disperse and react to polar ABA particles at low contents. The MFI is preferred to be in the range of from 3 to 700 grams /10 min. at 190°C/2.16Kg. More preferably, the MFI is in the range of from 100 to 500 g/ 10 min. at 190 °C/2.16 Kg conditions.

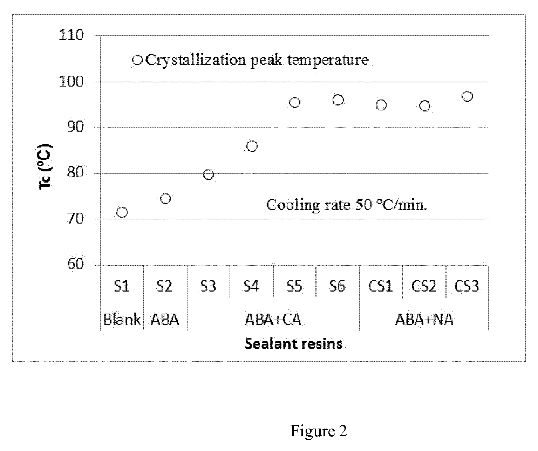

The content of polymeric coupling agents in some embodiments is in the range of from 0.05 to 2.0 wt.% of the heat sealable layer. More preferably, the content of the polymeric coupling agent is in the range of from 0.2 to 1.0 wt.% of the sealant layer. It is not desirable if the loading level of a polymeric coupling agent is higher than 2.0 wt. % or lower than 0.2 wt.% in the sealant composition. If higher than 2.0 wt.%, the sealant layer may stick to the metal coatings at the opposite layer of the sealant layer after metallization, leading to serious metal pickoff. If the loading level of a coupling agent is lower than 0.2 wt.%, there exists a limitation to the nucleating effect on the crystallization of base polyolefin in the sealant layer as seen in Figure 2, and processing issues such as cast film vibration and hot spots at the cooling drums cannot be solved for a BOPP film line with increased line speed.

Anti-blocking agents (ABA) are selected from those inorganic or organic anti-blocking agents having reactive functional groups on the surface of the substrate of the anti-blocking agent particulate. Preferably, anti-blocking agents have uniform spherical structure and narrow diameter distribution to more efficiently improve casting, winding, and machinability in the consequential process and application. Preferred types of anti-blocking agents are spherical sodium aluminum calcium silicates, amorphous silica and synthetic organic cross-linked silsesquioxanes with 2 to 3 µm average particle diameter in loading amounts of 3000-5000ppm in the sealant layer. In one embodiment, Momentive's Tospearl® 120 grade of polymethlysilsesquioxane with 2.0 µm diameter is selected as anti-blocking agent to control the COF of sealant layer of the film. In another embodiment, Mizusawa Silton® JC-20 (nominal 2 µm diamater) or JC-30 (nominal 3 µm diameter) is selected. Both anti-blocking agents have hydroxyl -OH functional groups on the surface of the antiblock particle, resulting in a chemical reaction with the reactive coupling agent during melt extrusion conditions and temperatures. Other suitable spherical anti-blocking agents include polymethylmethacrylate (PMMA), silicas, and silicates with a diameter range from about 2 µm to 3 µm. In the embodiment of a heat sealable metallized film, the use of migratory slip additives should be avoided due to their deterioration on barrier properties and metal adhesion of a metallized film.

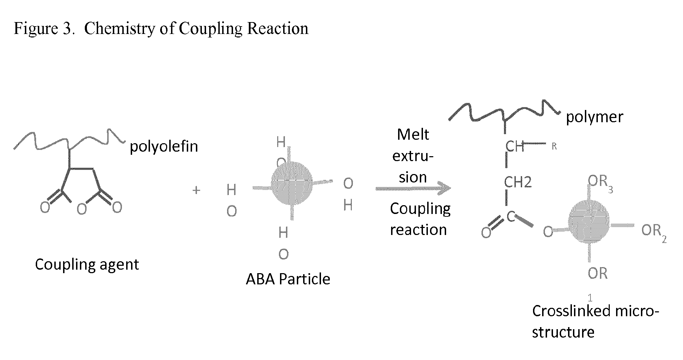

Without being bound by any theory, described herein is the reaction between inorganic or organic anti-blocking agent (ABA) particles and MAH-grafted-polypropylene-based polymeric coupling agent as an example to describe the coupling reaction in the embodiments of this invention. The example is only intended to illustrate a mechanism of a coupling reaction included within the scope of the invention. Figure 3 schematically represents the coupling reaction. There is at least one functional group on the surface of an ABA particle (e.g. hydroxyl -OH group). One or more of the chain segments of a polymeric coupling agent is covalently anchored onto the surface of ABA particle during melt extrusion to form a highly stable or partially cross-linked microstructure. R, R₁, R₂, and R₃ represent herein the chain segments covalently linked to the polymeric coupling agent.

Tospearl® polymethylsilsesquioxane particles, for instance Tospearl® 120, are considered as hydrophobic organic materials and compatible with polyolefin polymers; hence, there is no need to treat the particle surface as they are used as anti-blocking agent to make polyolefin films. Tospearl® particles are cross-linked siloxanes made by the controlled hydrolysis and condensation of methyltrimethoxysilane. There exist both hydrophobic properties (methyl groups) and hydrophilic -OH groups (open cage structure), although the majority of the functional groups are methyl groups on the surface of Tospearl® particles; nevertheless, there also exist a plurality of hydroxyl -OH groups on the surface of polymethlysilsesquioxane particles. Inorganic anti-blocking agents like silicates such as Silton® JC-30 and JC-20, are well-known in the art to have significant amounts of hydroxyl -OH groups on the surface, and the particles can be surface - treated with reactive coupling agents to enhance the adhesion between the particles and the polymer matrix. Maleic anhydride or glycidyl group of a polymeric coupling agent can also react with the hydroxyl -OH groups on the surface of ABA particles at extrusion temperatures to form stable covalent chemical bonds between the polymeric coupling agent and ABA particles.

The non-isothermal crystallization behavior of the propylene homopolymers and copolymers with fillers has been widely studied in the art. Anti-blocking agents added into the outermost layers of a BOPP film can act as a nucleating agent and can accelerate the crystallization of the composition of propylene copolymers and terpolymers. A coupling agent, for instance MAH-grafted-polypropylene, added into the polymer matrix reacts with the -OH groups on the surface of the ABA particles to form covalent bonds which increase the adhesion and interaction between the polymer matrix and the ABA particles. The adhesion and interaction further accelerate the crystallization rate and shift the crystallization peaks to higher temperatures. The polymeric coupling agent therefore enhances the efficiency of nucleating the crystallization of polymer composition.

**Table 1. Non-isothermal crystallization of sealant compositions**

| Sealant resins | | CA (wt%) | NA(ppm) | Tc(°C) |
|---|---|---|---|---|
| S1 | Blank | 0 | 0 | 71.5 |
| S2 | ABA | 0 | 0 | 74.6 |
| S3 | ABA+CA | 0.25 | 0 | 79.7 |
| S4 | | 0.5 | 0 | 85.9 |
| S5 | | 1.0 | 0 | 95.4 |
| S6 | | 2.0 | 0 | 96.1 |
| CS1 | ABA+NA | 0 | 300 | 94.9 |
| CS2 | | 0 | 500 | 94.6 |
| CS3 | | 0 | 1000 | 96.9 |

Table 1 presents the content of both coupling agents (CA) and nucleating agents (NA) in the sealant resin compositions studied using differential scanning calorimetry (DSC. The basic sealant resins herein described as examples are a blend of Mitsui Tafmer® XM7070 propylene-butene copolymer and Sumitomo SPX78R6 ethylene-propylene-butene terpolymer. SPX78R6 resin contains 5000 ppm of Tospearl® 120 with a diameter of 2.0 microns which was compounded into the sealant resin by the resin supplier. These sealant resin compositions S1 to S6 contain different additives except for samples S1 and S2, which were control samples. Each individual composition was dry blended and then pelletized using a single screw extruder purchased from Wayne Machinery (Model# 7980, screw diameter 0.25", L/D ratio 30.1) at 360 °F (182°C) to thoroughly blend and homogenize the samples for DSC analysis. The composition S1 was a "Blank" composition (no antiblock or other additives) and contained 80 wt.% SPX78J7 (neat or "barefoot" grade of SPX78R6) and 20 wt.% Tafmer® XM 7070. The composition S2 contained 80 wt.% SPX78R6 (which contained ABA particles but no coupling or nucleating agents) and 20 wt.% Tafmer XM7070; the Tospearl® ABA particle content in S2 was 4000 ppm after dilution. The compositions S3 to S6 (ABA+CA) contained Sumitomo SPX78R6 and Tafmer® XM7070 at a ratio of 80/20 wt.% ratio as well as additional polymeric coupling agent (CA) Polybond® 3000 at a loading level of from 0.25 to 2.0 wt.% of the mixture as shown in Table 1.

The comparative compositions CS1 to CS3 (ABA+NA) contained Sumitomo SPX78R6 and Tafmer® XM7070 at a ratio of 80/20 wt.% of the mixture as well as additional nucleating agent (NA) with an active loading level of from 300 to 1000 ppm of Milliken Chemical's HPN-20E as shown in Table 1. The active nucleating agent was made into a 10 wt.% masterbatch in polypropylene by Ampacet Corporation and sold as Ampacet 403837.

Figure 2 shows the non-isothermal crystallization behavior (as determined by DSC) of the sealant compositions listed in Table 1. The composition S1 without any additional additives had the lowest crystallization peak temperature (71.5 °C) in all the compositions. The composition S2 with 4000 ppm Tospearl® 120 particles as anti-blocking agent demonstrated a slightly higher crystallization peak temperature (74.6 °C) as compared to the 71.5 °C crystallization temperature of the blank composition S 1. The presence of the Tospearl® ABA particles slightly accelerated the crystallization of the S2 sealant composition, indicating that the particles have an obvious nucleating effect on the crystallization of the sealant composition. The compositions S3 to S6 have added coupling agent Polybond®3000 at a content of from 0.25 to 2.0 wt.% of the respective sealant compositions, resulting in a gradually increasing crystallization peak temperature from 79.7 °C to 96.1 °C, respectively. The interaction between the ABA particles and the polymer matrix increased with increased loading of the polymeric coupling agent; the effect of nucleating activity appeared to be saturated at about 1.0 wt.% for the Polybond® 3000 coupling agent, wherein the coupling reaction reached a low surface free energy of the ABA particles in contact with the polymer melt. The crystallization kinetics in polymeric coupling agent case was consistent with those observations in the art. The chain segments of MAH-grafted-polypropylene covalently linked to the ABA particles co-crystallized with the propylene chain segments around the ABA particles, which are heterogeneous nuclei in the molten polymer blend; the chain segments of the propylene copolymer and MAH-grafted-polypropylene had the same mobility to enter into a lamellar crystal structure as a nucleus appears and formed a co-crystal morphology, leading to a micro-phase-separated morphology in the molten polymer matrix. The growing separated phases centered by the ABA particles solidified first as crystals continued to grow with increasing time and as polymer temperature was reduced through cooling. Higher coupling agent loading is not preferable, as taught in US Patent 6,703,134 (herein incorporated as a reference), where maleic anhydride grafted polypropylene was used as an adhesion promoter in the skin layer of a metal receiving layer of a metallized biaxially oriented multilayer film. The extra polar hydrophilic maleic anhydride or acid group promoted the adhesion between the sealant layer and the metal-deposited coatings particles opposite the sealant layer, leading to undesirable severe metal pickoff and poor gas barrier properties.

The comparative composition CS1 demonstrated that the use of nucleating agents as low as 300 ppm loading level significantly raised the crystallization peak temperature of the polymer compositions from 74.6 °C to 94.9 °C respectively. As shown in the comparative compositions CS2 and CS3, additional increase in the loading (500 ppm and 1000 ppm) of the nucleating agent only slightly raised the crystallization temperature of the polymer composition to 96.9 °C. The crystallization peak temperatures resulting from the nucleating effect of Milliken Chemical's HPN-20E were much higher than that caused by ABA particles alone. ABA particles did not demonstrate the nucleating effect to polymer molten compositions at those temperatures whereas nucleating agents did.

Some embodiments include sequential or simultaneous biaxial orientation of multi-layer films, depending on the features designed for the films. Orientation in the machine direction is preferred to be 3 to 5.5 times, and the orientation in transverse direction is preferred to be 7 to 10.0 times. Line speed (and productivity) is increased through the increase of casting speed. Multi-layer films can be made by coextrusion, casting and orientation (typically sequential orientation in which machine direction orientation (MDO) is followed by the transverse direction orientation (TDO)). After a base film is made by this process, a further embodiment is to vacuum-deposit a metal -- preferably aluminum -- coating onto one surface of the base film, typically a surface designated or designed as a metal receiving layer. The resulting film presents excellent uniformity, gas and moisture vapor barrier, and was not impacted by the polymeric coupling agents added into the heat sealable layer.

In some embodiments of this invention, productivity was attempted to be increased by raising the line speed of a BOPP film line by about 20% over standard line speeds. There was no change in MDO ratio, sealant composition and the thickness of the heat sealable layer. The sealant composition contained a blend of Sumitomo SPX78R6 ethylene-propylene-butene terpolymer and Tafmer XM7070 propylene-butene copolymer at the ratio of 80/20 by weight of the sealant layer. As described previously, the loading of Tospearl® 120 as anti-blocking agent in the sealant composition was 4000 ppm. As cast speed was increased to the high end range of the film line capacity, for instance, about 11% over standard line speed, vibrations due to cast film sticking on the second cooling drum (CD2) occurred; in the meantime, air pockets were seen at the interface between the cast film and the surface of the third cooling drum (CD3), and hot spots were observed at the center of the cast film using an IR camera. These irregularities in the cast film at high line speeds caused frequent film breaks in the downstream MDO or TDO processes.

In some embodiments, a nucleating agent (e.g. Milliken Chemical's HPN-20E) was added into the same sealant composition in an attempt to prevent cast film web sticking to CD2 as line speed was increased. Theoretically, solidification of the sealant layer could be accelerated by adding nucleating agent into the sealant composition, thus, the film release problem at CD2 should disappear. Unexpectedly, the addition of nucleating agent did not show any processing improvement as taught in US Patent 5,271,976, although the isothermal crystallization of the sealant compositions with nucleating agent showed much higher crystallization peak temperature, compared to that of non-nucleated sealant compositions (as shown in Table 1 and Figure 2).

In the main embodiments, polymeric coupling agents Polybond®3000 and Orevac® CA100 were respectively added into the same sealant composition at different loading levels from 0.1 to 2.0 wt.% of the sealant composition to improve the distribution and nucleating efficiency of the ABA particles present in the sealant layer. Surprisingly, these polymeric coupling agents prevented the cast film from sticking to CD2 cooling drum and no film vibration, air pockets, nor hot spots were observed for the cast film as the cast speed was increased to reach a high line speed which was about 20% higher than standard line speed. These results were especially surprising in light of the fact that use of nucleating agents, in contrast, did not resolve these casting issues with film sticking, air pocket formation, and hot spots. The base films made with the polymeric coupling agent additive showed good uniformity, and excellent gas and moisture vapor barrier were obtained after metallization. Maleic anhydride grafted polypropylene coupling agents, for instance, Polybond® 3000 and Orevac® CA100 with high melt flow rate, were easily dispersed in the sealant composition during extrusion and were able to react with the -OH functional groups on the surface of the ABA particles to form covalent bonds. The strong interaction between the ABA particles and the polymer matrix as well as the capability of co-crystallization, enhanced the nucleating effects of the anti-blocking agents. Sealant polymer regions adjacent to the anti-blocking agent particles crystallized at higher temperatures and solidified sooner and more quickly than sealant resin regions not adjacent to anti-blocking agent particles, leading to micro-phase separation and rheology behavior change in terms of viscosity. The size of the solidified micro-phase was much larger than the size of the anti-blocking agent particles, leading to significant improvements in the effects of anti-blocking and cast film release from CD2 cooling drum.

In some embodiments a synthetic organic anti-blocking agent like Tospearl® 120 polymethylsilsesquioxane was replaced by an inorganic anti-blocking agent such as Silton® JC-20, which was made into a 5 wt.% masterbatch in the carrier resin Sumitomo SPX78J7. In this case, SPX78R6 was replaced by barefoot SPX78J7. The ratio of ethylene-propylene-butene terpolymer and propylene-butene copolymer was maintained at 80/20 wt.% ratio in the sealant composition. Maleic anhydride grafted polypropylene (MAH-g-PP) coupling agents for instance Polybond®3000 and Orevac® CA100 was used to improve the dispersion and nucleating effects of the JC-20 particles in the sealant layer. Adding MAH-g-PP coupling agent into the sealant composition enabled the cast speed of a BOPP film line to increase to the same degree (ca. 20% higher speed than standard line speed) as seen in the previous embodiment using a synthetic organic antiblock. No processing problem was seen for JC-20 silicate-type antiblock.

### Examples

The metallized film samples listed herein in Table 2 are representative examples and comparative examples used to describe embodiments.

**Table 2. Productivity and Performance of Examples**

| Examples | Additives | | Line speed (feet/min.) | Cast film temp.(°F) | COF(B/B) | | Barrier performance | | | Performance* |
|---|---|---|---|---|---|---|---|---|---|---|
| | CA (%) | NA (ppm) | | | Static | Dynamic | OD | O2TR (cc/100in2/day) | MVTR (100in 2/day) | |
| CFx1 | 0 | 0 | 1175 | 193 | 0.69 | 0.38 | 3.2 | 0.97 | 0.0032 | Good |
| CFx2 | 0 | 0 | 1310 | 217 | 0.78 | 0.41 | 3.2 | 1.02 | 0.0044 | Fair |
| CFx3 | 0 | 0 | 1400 | 226 | 0.75 | 0.47 | 3.2 | 0.97 | 0.0069 | Poor |
| Ex1 | 0.5 | 0 | 1400 | 215 | 0.72 | 0.36 | 3.2 | 0.84 | 0.0067 | Good |
| Ex2 | 0.5 | 0 | 1400 | 211 | 0.73 | 0.36 | 3.2 | 0.34 | 0.0031 | Exccellent |
| CFx4 | 0 | 200 | 1310 | 221 | 0.62 | 0.44 | 3.2 | 1.23 | 0.0044 | Poor |
| CEx5 | 0 | 500 | 1310 | 218 | 0.68 | 0.47 | 3.2 | 0.94 | 0.0050 | Poor |
| CEx6 | 0 | 1000 | 1310 | 219 | 0.65 | 0.48 | 3.2 | 1.06 | 0.0073 | Poor |

| | | | | | | | | | | |
|---|---|---|---|---|---|---|---|---|---|---|
| *Four level overall performance: Poor, Fair, Good, Excellent | | | | | | | | | | |

All tri-layer films were made under the same processing conditions by coextrusion, casting, orientation, and annealing. There were no changes in the recipes of the core layer and metal receiving layer. Machine direction orientation (MDO) was followed by the transverse direction orientation (TDO). After a base film was made by this process, the film was slit and then metallized by vacuum deposition, using aluminum at an optical density of about 3.2. The individual compositions of each layer were described previously in "Detailed Description" section. Briefly, a multi-layered base film included a core layer having a crystalline isotactic propylene homopolymer; a first heat sealable outer skin layer comprising a blend of propylene-based random terpolymer and copolymer (Sumitomo SPX78R6 and Tafmer XM 7070 at an 80/20 wt.% ratio, respectively, of the sealant skin layer); and a second outer skin layer as the metal receiving layer comprising of a crystalline isotactic propylene homopolymer and/or a crystalline isotactic "mini-random" propylene-based ethylene. Both skin layers were coextruded with the core layer and the first and second skin layers were disposed on opposite sides of the core layer. The total thickness of the exemplary films after biaxial orientation was ca. 70G or 0.7 mil or 17.5µm. The thickness of the respective heat sealable resin layer after biaxial orientation was ca. 6G (1.5 µm). The thickness of the core layer after biaxial orientation was ca. 60G (15 µm). The third layer on the side of the core layer opposite the heat seal layer was about 4G (1 µm) after biaxial orientation. The outer skin layers and the core layer were melt co-extruded together at nominal 450-500°F (230-260°C). The flat die temperature was set at 500°F (260°C) to maintain melt resin temperature. The three-layer co-extrudate was passed through a flat die to be cast onto a first cooling drum (CD1) held at 100-140°F (38-60°C) with the metal receiving side of the co-extrudate contacting the surface of the drum at a casting speed of ca. 250-350 fpm (ca. 76-107 mpm); followed by cooling on the second cooling drum CD2 in which the heat sealable layer was in contact with the surface of CD2 in order to cool the heat sealable layer; and on the third cooling drum CD3 to cool further the metal receiving layer. The temperature of the three cooling drums was set at the same temperature 60.0 °F (15.6 °C), while the surface temperature of these cooling drums varied with the order and line speed. The formed cast sheet was passed through a series of heated rolls at 210-270°F (99-132°C) with differential speeds to stretch in the machine direction (MD) at ca. 4.3x stretch ratio. This was followed by transverse direction (TD) stretching at ca. 10x stretch ratio in the tenter-frame oven at 310-350°F (154-177°C) and heat-set or annealed to reduce film shrinkage effects at ca. 304-343°F (151-173°C). The metal receiving layer opposite to the heat sealable layer was corona-treated to increase its surface energy to 39-43 dyne/cm after tenter-frame orientation and annealing. The base film was wound into a roll and then slit into "master" rolls with widths suitable for metallization in a typical vacuum chamber.

To compare the difference and improvements among the films, the temperature of cast films at the exit of CD3 was recorded automatically using a computerized infrared temperature sensor. The motion of cast film vibration at CD2 was recorded using a high-speed video camera manually. The air pockets on CD3 were visually observed if there was any for the test film. Higher cast film temperatures (as recorded by IR sensor) resulted from air pockets and resulting poor thermal conductivity between the cast film and the cooling drum. The base film of each test variable was collected for coefficient of friction (COF) measurements of the sealant layer in contact with itself (B-side/B-side) and heat seal performance test. After metallization, the optical density of the aluminum coating of each test film was measured. The transmission rate of oxygen and moisture gas was measured using Mocon permeation instruments.

### Comparative Example 1 (CEx. 1)

As shown in Table 2, CEx. 1 is the control heat sealable film made at a standard film-making line speed of ca. 1175 ft/min (358 mpm) after MDO stretching established for this film type product; thus, casting speed was about 273 fpm or 83.3 mpm casting speed (based on 4.3 MDX stretch ratio). No coupling agent or nucleating agent additives were added into the sealant composition, and no defects or processing issues such as cast film vibration, air pockets, and hot spots were observed as the film was cast and MD-oriented to reach line speed of 1175 ft/min (358 mpm). The temperature of the cast film at the exit of CD3 (location G shown in Figure 1) was about 193 °F (ca. 89.4°C). The COF of sealant side to sealant side (B/B) was 0.69 (static) and 0.38 (dynamic), respectively. After metallizing the film with aluminum at 3.2 optical density (OD), the O2TR and MVTR of the metallized film were 0.97 cc/100in2/day (about 15.0 cc/m2/day) and 0.0032 g/100in2/day (about 0.05 g/m2/day), respectively. Overall performance in terms of line stability and quality of base film and metallized film was considered "Good".

### Comparative Example 2 (CEx. 2)

In CEx. 2, no coupling or nucleating agent additives were added into the sealant layer. The film-making line speed for this comparative example was increased from 1175 to 1310 ft/min (about 358 to 399 mpm) -- thus, final casting speed was about 305 fpm (93 mpm) -- for higher productivity. Light cast film vibration, air pockets and hot spots were observed for the cast film made under this higher line speed, leading to occasional film breaks or uneven stretch marks. The temperature of cast film at the exit of CD3 increased to 217°F ((ca. 103°C) as an indicator of light casting sticking issues at CD2. Overall performance was considered "Fair" at this higher line speed of 1310 ft/min (399 mpm).

### Comparative Example 3 (CEx. 3)

In CEx. 3, no coupling or nucleating agent additives were added into the sealant composition. The film-making line speed for this example was increased from 1175 to 1400 ft/min (ca. 358 to 427 mpm) for further productivity improvement (final casting speed was about 325 fpm or 99 mpm). Heavy cast film vibration, severe air pockets and hot spots were observed for the cast film; heavy irregular uneven stretch marks and sticking marks as well as film breaks occurred frequently. A film sample was collected and metallized. The temperature of the cast film increased to 226 °F (130°C) at the exit of CD3, and the dynamic B/B COF increased slightly with increasing line speed. The line speed of 1400 ft/min (427 mpm) was unfavorable for BOPP film production. Overall performance was considered "Poor".

### Example 1 (Ex. 1)

In Ex. 1, a process similar to CEx. 3 was repeated except that the sealant layer contained 0.5 wt.% of the sealant layer of the polymeric coupling agent Orevac® CA100. The polymeric coupling agent was directly added into the sealant composition via dry blending prior to extrusion as a release promoter. The film-making speed was increased from the standard speed of 1175 fpm (358mpm) to the test speed of 1400 ft/min (427 mpm); thus, casting speed was raised from ca. 273 fpm (83 mpm) to ca. 325 fpm (99 mpm). The cast film was observed to smoothly release from CD2, with no cast film vibration or chattering, and no air pockets or hot spots were observed for the cast film made at 1400 ft/min (427mpm). The temperature at the exit of CD3 was only 215°F (101.7°C), slightly lower than the 217 °F (103°C) cast film temperature seen in CEx. 2 at 1310 ft/min (399 mpm) line speed. The dynamic B/B COF of the film was reduced to 0.36 dynamic. No problem was seen for barrier properties of metallized film sample at 0.84 cc/100in2/day (13.0 cc/m2/day) O2TR and 0.0067 g/100in2/day (0.104 g/m2/day) MVTR. Overall performance of the production at this raised line speed was considered "Good".

### Example 2 (Ex. 2)

In Ex. 2, a process similar to CEx. 3 was repeated except that the sealant layer contained 0.5 wt.% of the sealant of polymeric coupling agent Polybond®3000. The polymeric coupling agent was added into the sealant composition via dry blending prior to extrusion as a release promoter. The film-making line speed was able to be increased to 1400 ft/min (427 mpm) from the standard speed of 1175 fpm (358 mpm) without any processing problems such as cast film sticking at the CD2, hot spots, and uneven stretch marks. (Casting speed was thus raised from 273 fpm (83 mpm) to 325 fpm (99 mpm) without observing any of the casting process issues seen in the comparative examples.), Production at this line speed was stable and a uniform base film could be made with high output and quality. The temperature of the cast film at the exit of CD3 was only increased slightly to 211 °F (99°C) compared to the control film of CEx. 1 which was made at a significantly lower line speed; the dynamic B/B COF was lower and very comparable to CEx. 1. The base film made 1400 ft/min (427 mpm) showed very good gas and moisture vapor barrier after metallization: O2TR was about 0.34 cc/100in2/day (5.3 cc/m2/day) and MVTR was about 0.0031 cc/100in2/day (0.048 g/m2/day). Overall performance of the production at this high line speed was considered "Excellent".

### Comparative Example 4

In the comparative example CEx. 4, a process (line speed 1310 ft/min or 399 mpm; casting speed based on 4.3 MD stretch ratio was 305 fpm or 93 mpm) similar to CEx. 2 was repeated except that the sealant layer contained 200 ppm of a nucleating agent instead of a coupling agent. The nucleating agent was Milliken Chemical's HPN-20E which was made into a 10 wt.% masterbatch in polypropylene carrier resin by Ampacet. It was found that the film-making at this line speed condition of 1310 ft/min (399 mpm) was surprisingly unstable, with heavy cast film vibration/chattering, air pockets, and hot spots observed during the process of making the cast film. The cast film temperature at the exit of CD3 was increased to 221 °F (105°C), even higher than the control cast film without any added nucleating agent of CEx. 1 or CEx. 2. The stability of the production line was worse in CEx. 4 than the test films of CEx. 1 or CEx. 2 without any added nucleating agent. Overall performance of the film made in CEx. 4 was rated "Poor". **Comparative Example 5 (CEx. 5**)

In the comparative example CEx. 5, a process (line speed 1310 ft/min or 399 mpm; thus, casting speed was about 305 fpm or 93 mpm) similar to CEx. 4 was repeated except that the nucleating agent in the sealant layer was increased to 500 ppm. It was found that there were no improvements in the stability of the film-making production line and film quality. Cast film vibration, air pockets and hot spots were again observed during the process of making the cast film. The cast film temperature at the exit of CD3 was 218 °F (103°C), much higher than the cast film made without added nucleating agents as shown in CEx. 1 or CEx. 2. Although the gas and moisture vapor barrier was comparable to the control sample, overall performance of the film made in CEx. 5 was considered "Poor" due to the cast film sticking problems observed.

### Comparative Example 6 (CEx. 6)

In the comparative example CEx. 6, a process (line speed 1310ft/min or 399 mpm; thus, casting speed was about 305 fpm or 93 mpm) similar to CEx. 4 was repeated except that the nucleating agent in the sealant layer was increased to 1000 ppm. It was found that there were no improvements in the stability of the film-making production line and film quality despite increasing the loading of nucleating agent to twice the level of CEx. 5. Cast film vibration and chattering, air pockets, and hot spots were still observed during the process of casting the film. The cast film temperature at the exit of CD3 was 219 °F (104°C), much higher than the cast film made without added nucleating agent of CEx. 1 and 2. Overall performance of the film made in CEx. 6 was "Poor".

Surprisingly, the use of nucleating agent additives in the sealant layer of the heat sealable multi-layer BOPP film made the film casting process more difficult than it without using such nucleating agents. The formation of fine crystals in the polymer matrix in the sealant layer due the nucleating effects did not promote the cast film release from the cooling drum CD2. The polymer matrix surrounded by antiblock particles did not show the expected differences in the kinetics of crystallization behavior at the crystallization peak temperature in comparison with the polymer matrix localized in other areas without antiblock particles. In contrast and equally surprising, the use of coupling agents, however, significantly improved film casting processability compared to using nucleating agents or to using neither coupling nor nucleating agents. Without being bound by any theory, it is thought that while with the co-crystallization of polymeric coupling agent and interaction, large and relatively solidified phase-separated bumpy domains appear, and so the antiblock particles are better anchored (constrained) on the outer surface of the heat seal layer such that they will not be moved or pressed into the interior of the relatively soft cast film's polymer melt as they are compressed by the surface of CD2. The reduction in the contact force of the cast film's binding and sticking to the cooling drum's surface promotes the cast film release from CD2.

### Testing Methods

The various properties in the above examples were measured by the following methods:

Non-isothermal crystallization experiments were performed on a TA Instruments differential scanning calorimetry (DSC) model Q1000 purged with nitrogen. The samples were heated from -40 °C to 230 °C at a heating rate of 10 °C/min.; held for 5 minutes at this temperature to eliminate any thermal history effect; then the samples were cooled from 230°C to ambient temperature at a cooling rate of 50 °C/min. to determine the crystallization temperature in accordance with ASTM D3417-99. Fast cooling rate is aimed to simulate the cooling of cast BOPP film (quenching).

Optical density (OD) is a measure of the ability of a material's light blocking under specific conditions using a commercial densitometer. The densitometer is set to zero for no film specimen (no blocking of light); the probe is activated to measure the optical density of a film specimen with test surface facing upwards (typically the metallized surface). Optical density is reported in terms of a logarithmic conversion (OD = Log10 (1/ Light transmission)). For example, a density of 0.00 indicates that 100% of the light falling on the sample is transmitted. A density of 1.00 indicates that 10% of the light is being transmitted; 2.00 is equivalent to 1%, etc.

Coefficient of friction (COF) is measured according to ASTM D-1894.

Oxygen transmission rate is measured using Mocon Ox-tran® Model 2/21 according to ASTM D-3985 at 23°C and 0% relative humidity (RH).

Moisture transmission rate is measured using Mocon Permatran-W® Model 3/31 according to ASTM D1249 at 38°C and 90% relative humidity (RH).

Method of film-making cast film performance evaluation

Excellent = no cast film vibration or chattering, no air pockets, uniform cast film temperature; the number of film breaks in the range of 0 to 1 time in 12 hrs.

Good = Occasionally observe light cast film vibration or chatter, some small air pockets; relatively uniform cast film temperature; the number of film breaks in the range of 1 to 2 times in 12 hrs

Fair = Occasionally observe moderate cast film vibration or chatter, moderate sized air pockets, some hot spots; the number of film breaks in the range of 2 to 3 times in 12 hrs

Poor = Observe frequent or severe cast film vibration and chatter, heavy and large air pockets, highly non-uniform cast film temperature (large/many hot spots); the number of film breaks in the range of 3 to 5 times in 12 hrs.

This application discloses several numerical ranges in the text and figures. The numerical ranges disclosed inherently support any range or value within the disclosed numerical ranges even though a precise range limitation is not stated verbatim in the specification because this invention can be practiced throughout the disclosed numerical ranges.

## Claims

1. A coextruded biaxially oriented polypropylene film comprising:
a core layer comprising polypropylene; and
a heat sealable outer layer adjacent to the core layer comprising a blend ofpolyolefins, an anti-blocking agent, and a polymeric coupling agent that bonds to the anti-blocking agent and the at least one polyolefin.

2. The coextruded biaxially oriented polypropylene film of claim 1, further comprising at least one of:
a second outer layer on a side of the core layer opposite the heat sealable outer layer;
the heat sealable outer layer has a thickness of 1 to 3 µm;
the blend of polyolefins comprises propylene-based homopolymer, random copolymers or terpolymers, preferably propylene and one or more ethylene or butane monomers, more preferably ethylene-propylene copolymers, propylene-butene copolymers, or ethylene-butene copolymers, more preferably ethylene-propylene-butene terpolymer.

3. The coextruded biaxially oriented polypropylene film of claim 1, wherein the anti-blocking agent comprises inorganic or organic spherical particles comprising a hydroxyl functional group.

4. The coextruded biaxially oriented polypropylene film of claim 1, wherein the heat sealable layer comprises 0.1wt% to 2.0wt% polymeric coupling agent.

5. The coextruded biaxially oriented polypropylene film of claim 1, wherein the polymeric coupling agent comprises a maleic anhydride grafted polyolefin, copolymer of an olefin or terpolymer of an olefin having a reactive functional group, preferably wherein the polymeric coupling agent comprises a maleic anhydride olefin-acrylic acid/ester having a reactive functional group, wherein preferably the olefin is ethylene, propylene or butene.

6. The coextruded biaxially oriented polypropylene film of claim 5, wherein the polymeric coupling agent comprises polyolefins with a grafting rate of at most 3.0 wt.%.

7. The coextruded biaxially oriented polypropylene film of claim 1, wherein the polymeric coupling agent comprises at least one polar functional group selected from the group consisting of maleic anhydride, acrylic acid, and acrylate ester.

8. The coextruded biaxially oriented polypropylene film of claim 1, wherein the polymeric coupling agent reacts with hydroxyl functional groups on a surface of the anti-blocking agent and forms covalent bonds with the polymeric coupling agent and the anti-blocking agent at polyolefin extrusion temperatures.

9. The coextruded biaxially oriented polypropylene film of claim 1, wherein said polymeric coupling agent comprises maleic anhydride grafted polypropylene homopolymer.

10. The coextruded biaxially oriented polypropylene film of claim 1, wherein a surface of the film opposite the heat sealable layer is metallized, wherein preferably the metallized layer comprises aluminum, wherein more preferably the metallized layer has an optical density of 2.0-4.0.

11. A method of making a coextruded heat sealable polypropylene film comprising:
coextruding a core layer and heat sealable outer layer adjacent to the core layer, wherein the heat sealable layer comprises a blend of polyolefins, an anti-blocking agent, and a polymeric coupling agent that bonds to the anti-blocking agent and the at least one polyolefin;
and
biaxially orienting the coextruded film.

12. The method of claim 11, further comprising coextruding with the core layer and the heat sealable layer a second outer layer on a side of the core layer opposite the heat sealable outer layer.

13. The method of claim 11, further comprising at least one of:
the blend of polyolefins comprises propylene-based homopolymer, random copolymers or
terpolymers;
the blend of polyolefins comprises propylene and one or more ethylene or butane monomers;
the blend of polyolefins comprises ethylene-propylene copolymers, propylene-butene copolymers, or ethylene-butene copolymers;
the blend of polyolefins comprises ethylene-propylene-butene terpolymer;
the anti-blocking agent comprises inorganic or organic spherical particles comprising a hydroxyl functional group;
the heat sealable layer comprises 0.1wt% to 2.0wt% polymeric coupling agent.

14. The method of claim 11, wherein the polymeric coupling agent comprises a maleic anhydride grafted polyolefin, copolymer of an olefin or terpolymer of an olefin having a reactive functional group, wherein preferably the polymeric coupling agent comprises polyolefins with a grafting rate of at most 3.0 wt.%.

15. The method of claim 11, wherein a surface of the film opposite the heat sealable layer is metallized.
